# EUROPEAN PATENT APPLICATION

(11) **EP 0 723 843 A2**
(43) Date of publication of application: **31.07.1996**
(21) Application number: 96100330.8
(22) Date of filing: 11.01.1996
(51) Int. Cl.: B29B 7/76, B05B 7/26

(54) **Dispensing head for two-component foam with shutoff**

(30) Priority: 27.01.1995 US 379976; 20.12.1995 US 578066
(71) Applicant: NORDSON CORPORATION, Westlake, OH 44145 (US)
(72) Inventor: Wacker, Robert L., Wellington, Ohio 44090 (US); Hoversten, William R., Stow, Ohio 44224 (US); Peters, Gerald, Elyria, Ohio 44035 (US); Reep, Dan, Amherst, Oho 44001 (US)
(74) Representative: Eisenführ, Speiser & Partner

(57) **Abstract**

A mixing and dispensing head (30) is designed for use in a two component foam system. The head includes a body (42) having a mixing chamber (53) formed therein along a longitudinal axis and having a dispensing channel (89) downstream of the mixing chamber. At least two supply portions (58) are connected to the body, with each of the supply portions for supplying one of the components to the mixing chamber at a component entry location. Each of the component entry locations is longitudinally offset from each other. A rotating mixing member (85) within the mixing chamber for mixing the components together to form the foam product. The mixing member includes a cylindrical core having indentations in the core and having angled vanes (86) extending from the core. A shutoff portion (92, 104) is provided for stopping the flow of product from the dispensing channel.

## Description

### BACKGROUND OF THE INVENTION

This invention relates to foam materials produced from a chemical reaction by mixing two liquid components, and in particular to a system for dispensing the foam material and applying the foam material to a substrate.

Two component foaming systems are used in a wide variety of applications to create a closed-cell foam product and to apply the foam product to a substrate. Foam products produced in this manner can be used as sealants which provide barriers against air, dust, vapor and fluids in various applications. They also find application in providing thermal or sound insulation layers.

In two component foam dispensing systems, the foam is created by a chemical reaction between the two liquid components. When the two liquid components are mixed together, the chemical reaction occurs, creating a new compound, such as polyurethane, which is the foamed material, and creating a foaming agent, such as carbon dioxide, which is entrained within with the foamed material to create the foam. Since the chemical reaction occurs almost instantaneously, the two liquid components must be mixed together in a dispensing head immediately prior to applying the foam material onto the substrate.

In order to properly and effectively create and apply two component foam products, several factors must be considered. One consideration is the proper ratio of liquid components. In order to create the foam product with the desired physical properties and appearance, the mass quantities of each of the components must be properly matched. This requires that the flow rate of each of the liquid components that is supplied to the mixing and dispensing head be accurately controlled. Since the mass flow of each component will vary depending upon several factors, such as the amount of entrained air in the liquid and the temperature of the liquid, it is sometimes difficult to accurately meter the flow of the components to the dispensing head.

Another consideration is the separate maintenance of each of the components prior to dispensing and the proper mixing of the components in the dispensing head. Since the components when mixed will almost instantly react to produce the foamed product, it is important that the components remain separate and that mixing of the components is avoided until immediately prior to dispensing the foam onto a substrate. For this purpose, a dispensing head or gun must be used in which the two components can be mixed and in which the mixture is then immediately applied to the substrate.

The mixing and dispensing heads used with such systems can be either dynamic mixers or static mixers. Dynamic mixers using a mixing element, such as a rotating mixing core to create a turbulence in a mixing chamber which contains both components. The components are thus mixed together, and the chemical reaction which creates the foam product occurs. Static mixers accomplish the mixing of the components without a moving element. An example of static mixer is an impingement mixer in which the mixing of the two liquid components is accomplished by forcing each component through a jet or nozzle and shooting each component against each other to mix the components together.

Another consideration is the maintenance of the dispensing head or gun in a clean condition. After the liquid components have been mixed together in the head, the foam product is created, and this foam product can build up along the dispensing flow path inside the gun. This build-up of foam material must be cleaned from the gun periodically, and for this purpose a purge system is usually provided. The purge system is used to provide a supply of an appropriate cleaning solvent to the dispensing flow path of the gun to clean the flow path.

Another consideration is the ability of the system to accommodate intermittent operation of the dispensing head or gun. In most dispensing systems, the foam product is not dispensed continually onto the substrate. Instead, the dispensing flow is turned on and off, and this intermittent operation of the dispensing head must be accommodated. When the dispensing flow is turned on and off, there can be intermittent increases in pressure of the lines supplying the liquid components to the dispensing head. These pressure increases can affect the flow rate of the components, and, if the mass flow rate of one component varies relative to the other component, the components will not be mixed in the proper proportion, causing an adverse effect to the properties and appearance of the foam product being dispensed.

One problem associated with the mixing and dispensing heads is the residual dripping of the foam product from the dispensing head after the flow of foam material should be cut off. The flow of foam material in the mixing and dispensing head is usually regulated by valves which control the supply of the liquid components to the head. When it is desired to interrupt the dispensing of the foamed material, the component supply values are closed. The remaining amounts of liquid components mix together to create the foamed product, which then exits from the mixing chamber and from the dispensing head, but there is usually no positive shut off of the foamed material from the dispensing head. As a result, small remaining amounts of the foam product can continue to drip from the dispensing head after the flow of the components has been cut off. This drip can fall onto portions of the substrate at undesired locations and can otherwise provide a nuisance during production.

### SUMMARY OF THE INVENTION

The present invention provides a dynamic mixing and dispensing head for use in a two-component foam dispensing system, which overcomes the problems of the prior art and provides several unique advantages. The present invention relates to a dynamic mixer in which a moving mixing element is used to create turbulence to positively mix the two components together. This dynamic mixer should be contrasted with the static mixers which do not use such a mixing element.

The present invention provides a unique design for a mixing and dispensing head which contains a dynamic mixing chamber and in which the two liquid components are supplied to the mixing chamber at different vertical locations. The component supplies are vertically offset from each other, so that one of the components enters the mixing chamber upstream of the other component. This allows the components to more easily mix together. Where one of the components has better lubricating qualities than the other and has less tendency to attack the seals, the vertically offset component supplies allow the better lubricating component to be introduced into the mixing chamber first.

The dynamic mixing and dispensing head of the present invention uses a mixing core which rotates in a mixing chamber. The mixing core has an effective arrangement of indentations and angled vanes on its exterior which creates turbulence within the mixing chamber to thoroughly mix the components together. This thorough mixing of the components assures that the chemical reaction which creates the foam will be complete and that the presence of unreacted components is avoided.

To prevent the undesired dribble or drip of residual foam product, the mixing and dispensing head of this invention also includes a flow shutoff assembly located at the extreme downstream end of the head where the foamed material exits the head. The flow shutoff assembly provides for a positive shut off of the foamed material from the mixing and dispensing head, so that the residual material does not drip onto the substrate after the component supply valves have been closed. The flow shutoff assembly operates automatically, so that manual pinching or closing of the dispensing channel is avoided. Preferably, the flow shutoff assembly includes a withdrawal or sucking operation which pulls any residual material below the shutoff back up the dispensing channel to eliminate drips or dribbles. The flow shutoff assembly is preferably pneumatically actuated to facilitate the closing of the dispensing channel as desired.

These and other advantages are provided by the present invention of a mixing and dispensing head for a two component foam system. The head comprises a body having a mixing chamber formed therein along a longitudinal axis; at least two supply portions connected to the body, each of the supply portions for supplying one of the components to the mixing chamber at a component entry location, each of the component entry locations being longitudinally offset from each other; and a rotating mixing member within the mixing chamber for mixing the components together to form the foam product.

In accordance with another aspect of the present invention, a dispensing head is provided for a fluid material. The dispensing head comprises a dispensing channel providing a supply of fluid material to be dispensed. A housing is connected to the dispensing channel, the housing having an inner chamber. A flexible tube is positioned within the housing and communicates with the dispensing channel to receive a flow of the material, the tube extending through the chamber. A port provides a supply of pressurized fluid to the chamber at variable pressure, a low pressure of fluid allowing the flow of material through the tube, a high pressure of fluid producing substantial pinching of the tube, and an intermediate pressure producing less pinching of the tube and causing withdrawal of the material in the tube in an upstream direction below the pinching.

### BRIEF DESCRIPTION OF THE DRAWINGS

FIG. **1** is a schematic diagram of the two-component foam dispensing system.

FIG. **2** is a side sectional view of the mixing and dispensing head of the present invention.

FIG. **3** is a top plan of the mixing and dispensing head taken along line **3**―**3** of FIG. **2**.

FIG. **4** is a side elevational view of the mixing and dispensing head taken along line **4**―**4** of FIG. **2**.

FIG. **5** is a side sectional view of the purge valve system of the mixing and dispensing head taken from the same elevation as FIG. **4**.

FIG. **6** is a detailed sectional view of one of the supply valve assemblies of the mixing and dispensing head, which is a portion of the side sectional view of FIG. **2** to a larger scale.

FIG. **7** is detailed sectional view of the flow shutoff assembly of the mixing and dispensing head shown with the dispensing channel open, which view is a portion of the side sectional view of FIG. **2** to a larger scale.

FIG. **7A** is a portion of the sectional view of the flow shutoff assembly similar to FIG. **7** taken along a radius which is angularly offset from the section of FIG. **7** to show the connection of the nozzle member and the housing to the rest of the mixing and dispensing head.

FIG. **8** is another sectional view of the flow shutoff assembly of FIG. **7** with the assembly actuated to close the dispensing channel.

FIG. **9** is another sectional view of the flow shutoff assembly of FIGS. **7** and **8** with the assembly actuated so as to withdraw or suck the material back up the dispensing channel.

FIG. **10** is a sectional view similar to FIG. **7** of an alternative flow shutoff assembly with the dispensing channel open.

FIG. **11** is another sectional view of the flow shutoff of FIG. **11** with the assembly actuated to close the dispensing channel.

### DETAILED DESCRIPTION OF THE PREFERRED EMBODIMENT

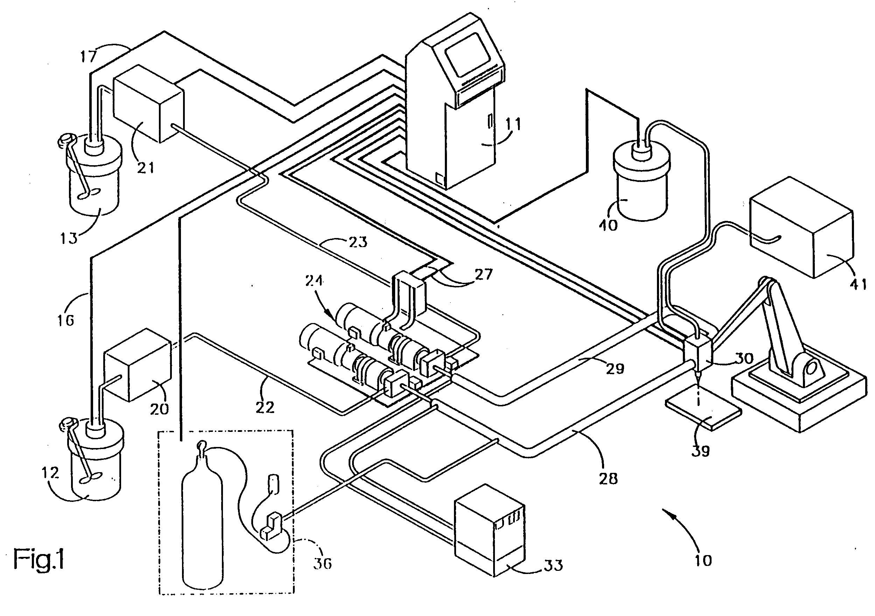

Referring more particularly to the drawings and initially to FIG. **1**, there is shown a two-component foam dispensing system **10**. The system **10** is described more fully in co-pending United States patent application, entitled "Method and Apparatus for Dispensing Two-Component Foam," Application Serial No. 08/379,720, filed on January 27, 1995. The system **10** comprises a control console **11** which contains all of the control circuits for operating the system. The system **10** also comprises two supply tanks **12** and **13**, each providing a reservoir containing one of components which will be combined to form the foamed material. A first component is contained in the supply tank **12** and a second component is contained in the other supply tank **13**. In this embodiment disclosed herein, the system **10** disclosed is a two-component foam system comprising polyol and isocyanate which combine to form polyurethane foam. Thus, in this embodiment, the first component contained in the supply tank **12** is polyol, and the second component contained in the supply tank **13** is isocyanate. It should be understood, however, that the system **10** can be used with other two-component foam combinations. Each of the supply tanks **12** and **13** may contain suitable level controls to monitor the amount of material in each tank, and each of the supply tanks is connected to the control console **11** by control lines **16** and **17**.

Preferably, high pressure pumps **20** and **21** are used to feed the components from the supply tanks **12** and **13** through suitable supply hoses **22** and **23** to metering pumps **24**. The metering pumps **24** may be essentially the same as those shown in United States Patent No. 5,332,125, the disclosure of which is hereby incorporated by reference in its entirety. The metering pumps **24** accurately meter the proper mass ratio of each of the two components from the supply tanks **12** and **13** and supply a mass flow according to this proper ratio through supply hoses **28** and **29** to a mixing and dispensing head **30**.

The supply hoses **28** and **29** from the metering pumps **24** to the mixing and dispensing head **30** are preferably jacketed to control the temperature of the components in the supply hose by circulating a liquid in the outer jacket. A temperature conditioning unit **33** supplies cooling or heating liquid, such as water, to the outer jacket of the supply hoses **28** and **29**. The control console **11** may also be connected to the temperature conditioning unit **33** by suitable control lines (not shown). A gas injection system **36** may be used to inject a precise amount of gas into the polyol supply hose **28** downstream of the metering pump **24**.

At the mixing and dispensing head **30**, the two components are mixed according to the accurate ratios of each component supplied to the dispensing head by the metering pumps **24**, and dispensed onto a substrate **39**. The mixing and dispensing head **30** is also connected to a purge system comprising a solvent supply **40** and an air supply **41**. The purge system is used to purge or clean the head **30** as needed. The solvent may be any suitable solvent. A preferred solvent can be a soap solution as it is relatively benign and does not present any safety hazards. The actual solvent used will depend upon the materials in the system.

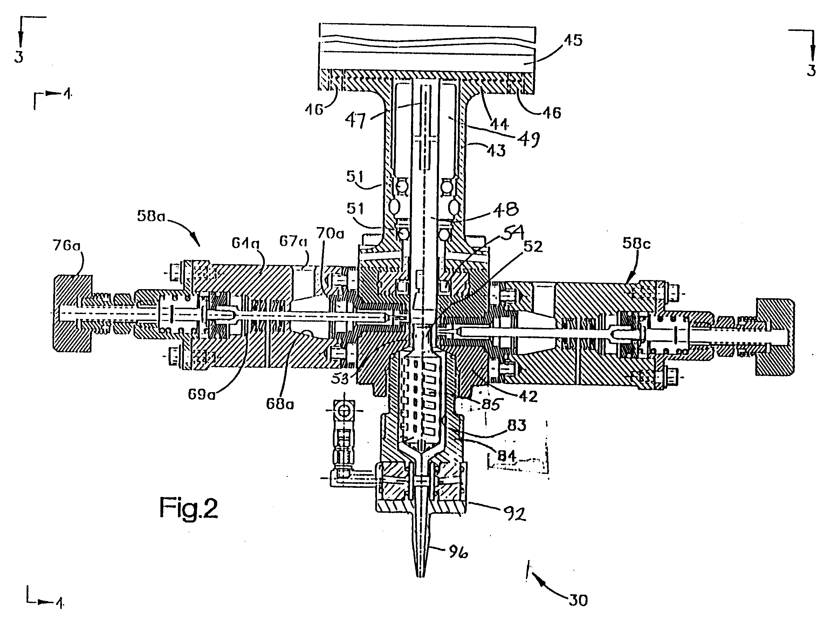

The mixing and dispensing head **30** is shown in more detail in FIG. **2**. The head **30** comprises a main body **42** with a bearing housing **43** attached to the upper end. A platform **44** is formed on the upper end of the bearing housing **43**, and an electric servo motor **45** is mounted on the platform **44** by means of screws **46**. A rotatable motor shaft **47** extends downwardly from the motor **45** through an opening in the platform **44** into the bearing housing **43**. The motor shaft **47** is connected to a drive shaft **48** by means of a coupling **49**. The drive shaft **48** extends vertically through a central opening in the bearing housing **43**, where it is journalled in bearings **51**, and extends into a coaxial central opening in the main body **42**. A mixing shaft **52** is mounted on the lower end of the drive shaft **48**. The mixing shaft **52** rotates within a mixing chamber **53** formed at the lower end of the central opening in the main body **42**. A suitable sealing device **54** is provided around the lower end of the drive shaft to seal upper end of the mixing chamber **53**. The preferred sealing device is a Model No. S67350-2588 sealing ring, sold under the name Varilip, available from the American Variseal division of CBB Seal Co., Warrensville Heights, Ohio, U.S.A.

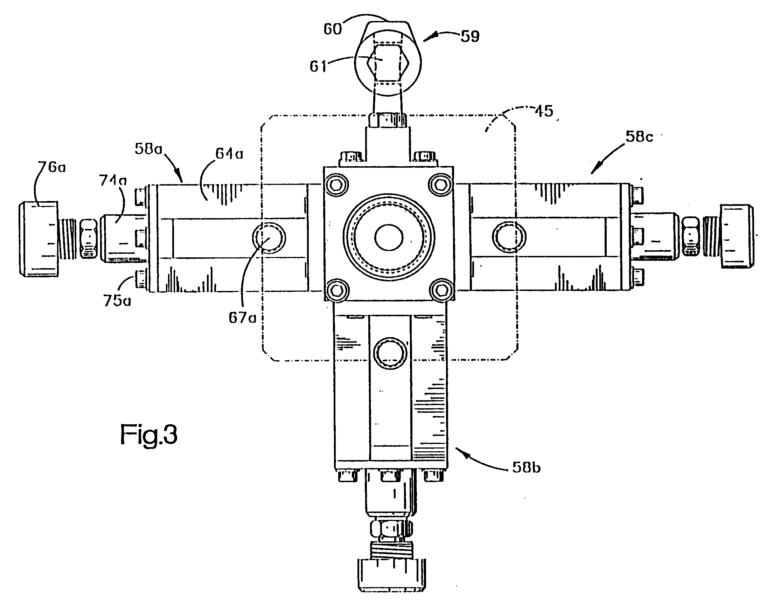

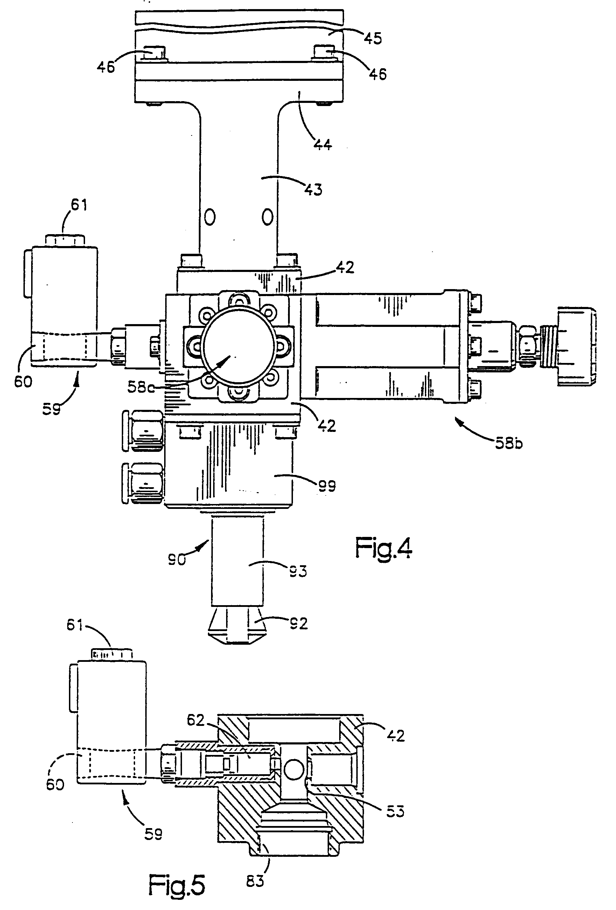

Extending horizontally outwardly from the main body **42** are a plurality of supply valve assemblies **58***a*, **58***b* and **58***c* (FIG. **3**). In the preferred embodiment shown, there are three supply valve assemblies **58***a*, **58***b* and **58***c*, two supply valve assemblies **58***a* and **58***b* for the polyol, and one supply valve assembly **58***c* for the isocyanate. Two supply valve assemblies are provided for the polyol, to allow the user to connect the mixing and dispensing head to two different supplies of polyol, such as to change the color of the dispensed material. However, it should be understood that only one polyol supply valve assembly is necessary. The supply valve assemblies extend horizontally in a direction generally perpendicularly to each other. In other words, the supply valve assembly **58***a* is perpendicular to the supply valve assembly **58***b*, and the supply valve assembly **58***b* is perpendicular to the supply valve assembly **58***c*. The supply valve assembly **58***a* is thus opposite the supply value assembly **58***c*. A purge valve assembly **59** (FIG. **4**) is opposite the other supply value assembly **58***b*. As shown in FIG. **5**, the purge valve assembly **59** includes a port **60** which provides an inlet for connection to the solvent supply **40** and a port **61** which provides an inlet for connection to the air supply **41**, both as previously described. The purge valve assembly **59** allows the purge solvent and high pressure air to be introduced into the mixing chamber **53** to clean the chamber of component residue as needed. The purge valve assembly **59** also includes a check valve **62** to prevent components from flowing back to the solvent and air supplies **40** and **41**.

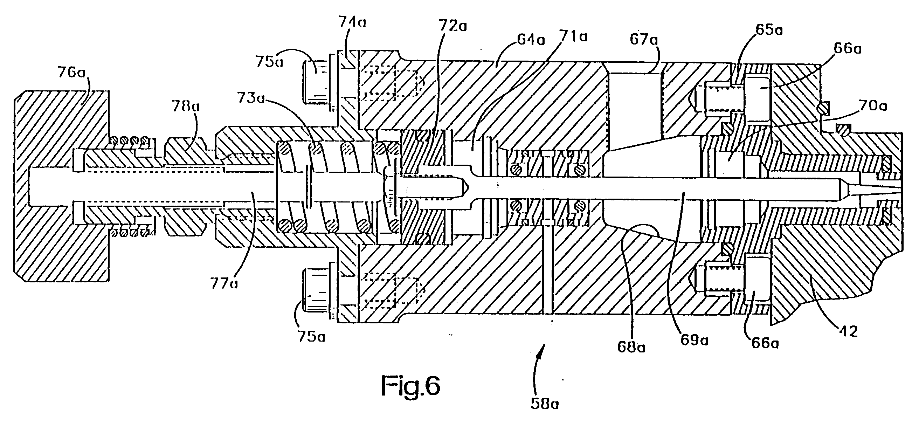

All of the supply valve assemblies **58***a,* **58***b* and **58***c* are essentially the same, and all can be described with reference to the supply valve assembly **58***a* shown in more detail in FIG. **6**.

The supply valve assembly **58***a* is pneumatically operated "zero cavity" valve, comprising a body assembly formed of a main body portion **64***a* and a secondary body portion **65***a* which is attached to the main body portion **64***a* by means of suitable fasteners such as screws **66***a*. The body assembly comprising the portions **64***a* and **65***a* is mounted onto the side of the main body **42** by another set of screws (not shown) arranged at 45° with respect to the screws **66***a*. A port **67***a* is provided on one side of the body **64***a*. The port **67***a* has internal threads for insertion of a suitable connection to a supply hose, such as one of the supply hoses **28** and **29** shown in FIG. **1**. The component material from the supply hose enters the body **64***a* through the port and enters into a supply chamber **68***a* formed within the body **64***a*. The supply chamber **68***a* is connected to the mixing chamber **53** within the main body **42**, and a valve seat is provided between the supply chamber **68***a* and the mixing chamber **53**. A needle valve member **69***a* is guided by a guide member **70***a* mounted in the downstream portion of the chamber **68***a*. The needle valve member **69***a* extends through the chamber **68***a* and engages the valve seat to control the flow of component material from the supply chamber **68***a* into the mixing chamber **53**. With "zero cavity" valve design, the valve head formed by the needle valve member **69***a* is at the maximum position downstream so that there is no cavity of residual material downstream in the supply chamber prior to entering the mixing chamber. When the needle valve member **69***a* is retracted away from the valve seat, the flow of component material from the supply chamber **68***a* into the mixing chamber **53** is enabled. When the needle valve member **69***a* rests on the valve seat, the flow of component material from the supply chamber **68***a* into the mixing chamber **53** is cut off. The needle valve member **69***a* is actuated through a pneumatic chamber **71***a* formed within the body **64***a*. Air in the pneumatic chamber **71***a* operates against a piston **72***a* connected to the end of the needle valve member **69***a* to open the valve. The valve is urged into the closed position by a spring **73***a* which pushes against the piston **72***a* on the opposite side from the pneumatic chamber **71***a*. The spring **73***a* is retained within a cap **74***a* attached to the end of the body **64***a* by suitable fasteners such as bolts **75***a*. The maximum open position of the valve is adjusted by means of an adjusting knob **76***a* which is mounted on the end of an adjusting rod **77***a*. A nut member **78***a* is mounted on the end of the cap **74***a*, and makes a threaded connection with the adjustant rod **77***a*. The axial position of the adjusting rod **77***a* is changed by turning the knob **76***a* to move the adjusting rod relative to the nut member **78***a*.

Referring again to FIG. **2**, the upper portion of the mixing shaft **52** comprises a portion which rotates in the upper portion of the mixing chamber **53** and which is contacted by the component material exiting from the supply valve assembly **58***a*. It will be noted that the supply valve assembly **58***a* is vertically offset from the supply valve assembly **58***c*, so that the components enter the mixing chamber **53** at different vertical levels. In the preferred embodiment, the level of the supply valve assemblies **58***a* and **58***b* is vertically above the level of the supply valve assembly **58***c*, so that the polyol is introduced into the mixing chamber **53** upstream of the isocyanate. This arrangement should be contrasted with impingement mixers of the prior art in which the components enter the mixing chamber opposite each other and mixing is accomplished by shooting the components at each other in the mixing chamber.

One reason why the exit of the supply valve assembly **58***a* is located above the exit of the supply valve assembly **58***c* is because polyol has better lubricating qualities than isocyanate and has less tendency to attack the seals, so it is preferred that polyol be introduced into the mixing chamber upsteam of isocyanate.

Below the mixing chamber **53** is an enlarged mixing chamber **83** formed within a tubular extension **84** mounted on the lower portion of the main body **42**. Within the extension **84** is a cylindrical mixing core **85** having an array of indentations and outwardly extending angled vanes **86**. The mixing core **85** is mounted to the lower end of the mixing shaft **52**, and the core rotates within the enlarged mixing chamber **83** as the mixing shaft turns. As the cylindrical mixing core **85** rotates, the vanes **86** create turbulence which mixes the components supplied from the supply valve assemblies **58** until the components are thoroughly mixed together to create the chemical reaction which produces the foam which is then ready to be dispensed from the mixing and dispensing head **30**.

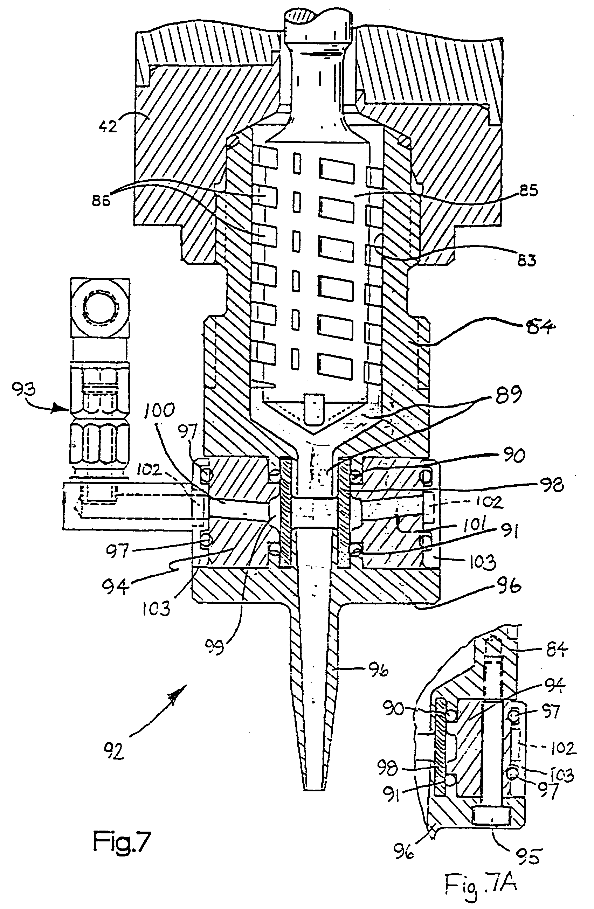

At the bottom of the extension **84**, the mixing chamber **83** tapers to a dispensing channel **89**, as shown in more detail in FIGS. **7**, **8** and **9** After the components have been thoroughly mixed together in the mixing chamber **83**, the components enter the dispensing channel **89**. The dispensing channel **89** is designed as a relatively straight channel without convolutions or corners which could collect undesirable accumulations of foam material which would be difficult to clean during operation of the purging system.

Below the dispensing channel is a flow shutoff assembly **92** which prevents residual portions of the mixed components from dripping or dribbling from the head when the supply valve assemblies have been closed. The flow shutoff assembly **92** comprises a housing **94** which is positioned at the bottom of the extension **84**. A dispensing nozzle member **96** is mounted onto the bottom of the housing **94**. The housing **94** and the nozzle member **96** are attached to the extension **84** by bolts **95** (FIG. **7A**). (The bolts **95** do not appear in FIG. **7** because they are angularly offset from the sectional view of FIG. **7**.) ports The housing **94** has an inner central flow channel which extends generally axially below the dispensing channel **89** and forms an extension of the dispensing channel **89**. An inner flexible tube **98** is provided within the housing **94** surrounding and defining the flow channel. The upper end of the tube **98** is captured between the outside of the lower end of the extension **84** and the inside of the housing **94** and sealed with a suitable O-ring **90** , while the lower end of the tube is captured between an upper end of the dispensing nozzle member **96** and the inside of the housing and sealed with a suitable O-ring **91**.

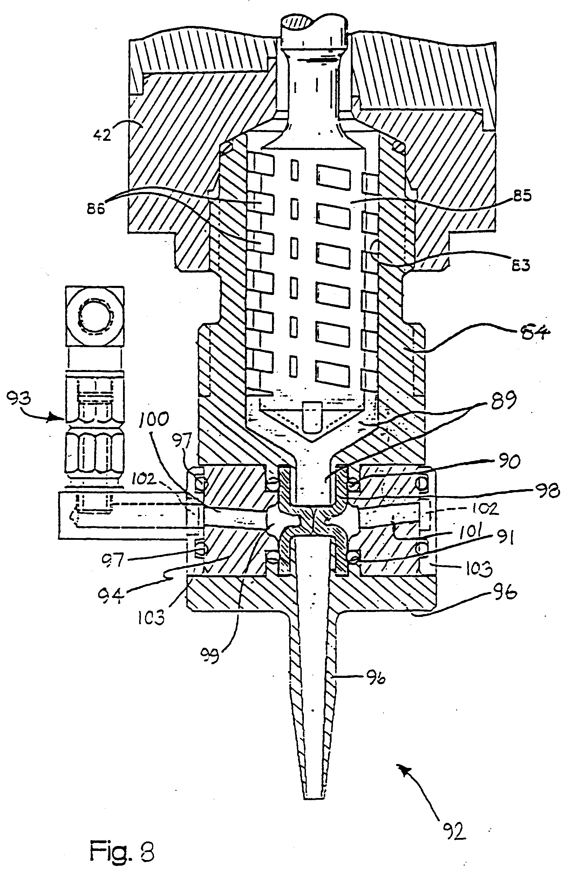

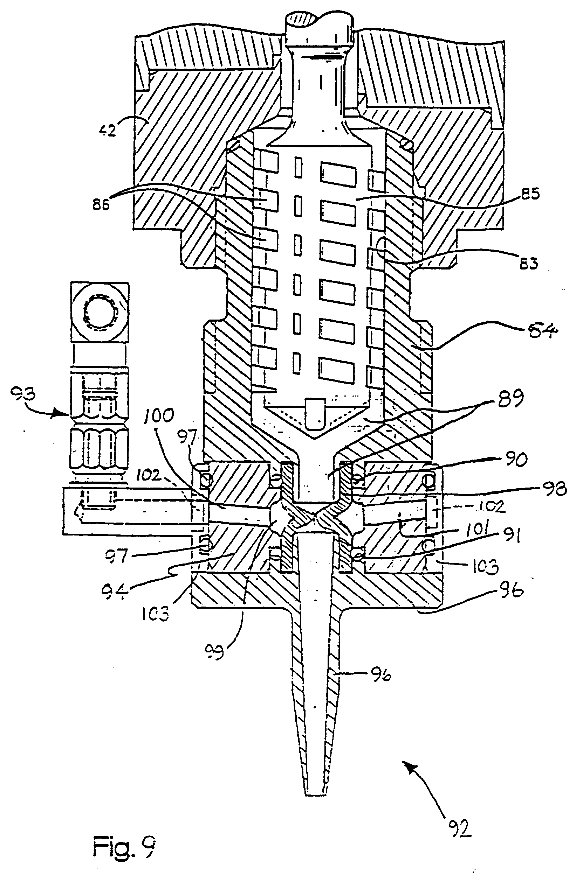

An enlarged pneumatic chamber **99** is formed around the exterior of the tube **98** in the middle of the housing **94**. The pneumatic chamber **99** extends along a substantial length of the tube **98**. A pair of ports **100** and **101** are formed in opposite sides of the housing **94**. The ports **100** and **101** communicate with the chamber **99**. The ports **100** and **101** are both connected to an outer annular chamber **102** which is formed in a ring **103** which is positioned around the housing **94**. The annular chamber **102** in the ring **103** is sealed to the exterior of the housing **94** by suitable O-rings **88**. The ring is connected to a fitting **93** which can be connected to a suitable pneumatic line (not shown) to allow the chamber to be pressurized. When the chamber **99** is pressurized, the tube **98** pinches inwardly so that it squeezes or flattens to shutoff the flow of the foam material. Although the chamber **99** is annular and extends completely around the tube **98**, the arrangement of the ports **100** and **101** on opposite sides of the housing **94** causes the tube **98** to flatten in a plane perpendicular to the common axes of the ports when the chamber is pressurized. Therefore, two ports **100** and **101** are preferred, although any number of ports may be used. The length of the tube **98** which is flattened depends upon the amount of air pressure applied to the chamber **99**. If high pressure is applied to the chamber **99**, as shown in FIG. **8**, the tube **98** is flattened along the entire length of the tube that extends through the chamber. If a lesser amount of air pressure is applied to the chamber **99**, as shown in FIG. **9**, the tube **98** is flattened for a shorter length, although it still cuts off the flow of the foam material. The chamber **99** extends along a substantial length of the tube **98** to allow the amount of flattening of the tube to be varied by varying the air pressure in the chamber.

In use, without air pressure applied to the chamber **99**, the tube **98** remains relatively straight or cylindrical, and the foam material can flow through the tube to the dispensing nozzle **96** and onto the substrate, as shown in FIG. **7**. When the flow of the foam material is shut off, substantial air pressure is applied to the chamber **99** through the ports **100** and **101** causing the tube **98** to squeeze or flatten along a substantial length of the tube that extends through the chamber with the tube flattening in the plane perpendicular to the common axes of the ports, as shown in FIG. **8**. The air pressure applied to the chamber **99** can then be reduced slightly, so that the length of the tube which is flattened is reduced, as shown in FIG. **9**. The tube **98** is resilient, so it tends to return to its normal straight or cylindrical shape when the pressure is reduced. This increases the volume within the tube **98** below the flattened portion, and causes the remaining foam material in the tube below the flattened portion to be withdrawn or sucked back up in the tube, preventing residual dribble from falling onto the substrate after shutoff.

The amount of air pressure which is applied to the tube for initial shut off and the lesser amount of air pressure applied to produce the withdrawal or sticking action in the tube will depend upon the geometry and size of the chamber **99** and the material used for the flexible tube **98**. The tube **98** should be of a flexible material which has a long flex life and is able to withstand the temperature, chemical content, and abrasive nature of the materials being dispensed. To achieve the complete shutoff shown in FIG. **8**, the maximum amount of air pressure that can be withstood by the system can be provided to the chamber. To achieve the withdrawal or sucking action shown in FIG. **9**, the air pressure should be reduced to the level which is high enough so that the tube **98** remains closed a one point, but low enough so that tube is substantially open below the flattened portion so that the substantial increased volume below the flattened point is achieved.

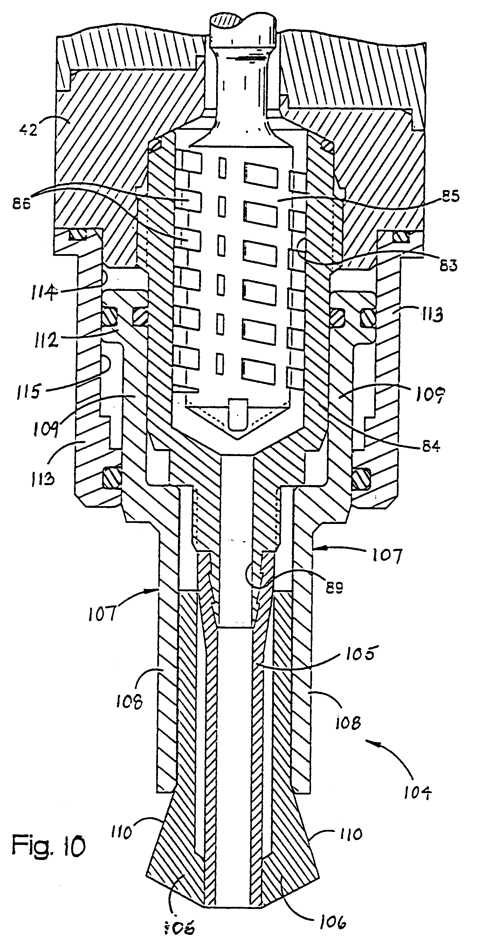

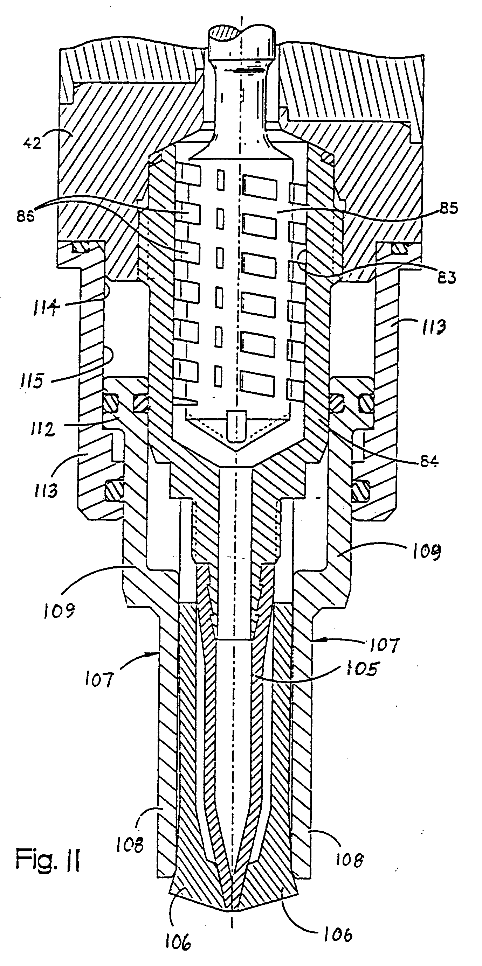

FIGS. **10** and **11** shown an alternative embodiment of a flow shutoff assembly **104**. The flow shutoff assembly **104** comprises a flexible tube **105** which is attached at the lower end of the dispensing channel **89**, and the mixed components which are dispensed by the head enter the flexible tube **105** after exiting from the dispensing channel **89**. Adjacent to the lower end of the flexible tube **105** are pincher fingers **106**. Any number of pincher fingers **106** can be used, but in the preferred embodiment three fingers are employed. The pincher fingers **106** are capable of moving inwardly to compress or pinch the tube **105** to stop the flow of mixed components from the end of the tube. A piston member **107** is positioned around the pincher fingers **106**. The piston member **107** has a lower portion forming a tubular actuating collet **108** and an integral upper portion forming a piston **109**. The pincher fingers **106** are cammed inwardly by the vertically movable actuating collet **108** which surrounds the fingers. The lower end of the fingers **106** have camming surfaces **110** which extend radially outwardly from the flexible tube **105**. As the actuating collet **108** moves downwardly, as shown in FIG. **11**, it engages the camming surfaces **110** of the fingers **106** and forces the fingers **106** radially inwardly to pinch the tube **105** and cut off the flow of product from the tube. As the actuating collet **108** moves upwardly, as shown in FIG. **10**, it releases the fingers **106** so that they can move radially outwardly to allow product to be dispensed from the tube **105**.

The upper portion of the piston member **107**, which is the piston **109**, has a radially outwardly extending flange **112**. The piston **109** fits around the exterior of the extension **84**, and a ring **113**, which is attached to the lower end of the main body **42**, fits around the flange **112** and around exterior of the piston **109**. The piston member **107** is moved upwardly and downwardly through the use of actuating pneumatic chambers **114** and **115**. One pneumatic chamber **114** is formed between the bottom of the main body **42**, the top of the flange **112**, the outside of the extension **84** and the inside of the ring **113**. The other pneumatic chamber **115** is formed between the inside of the lower portion of the ring **113** and the outside of the piston **109**. In effect, the flange **112** forms the actuating piston which moves up and down within an annular piston chamber formed between the inside the ring **113** and the outside of the extension **84**. Both chambers **114** and **115** are individually connected to a suitable pneumatic line (not shown) to allow each chamber to be individually pressurized. When the pneumatic chamber **114** is pressurized, the actuating collet **108** is pushed downwardly to cam the fingers **106** inwardly to pinch the flexible tube **105**. When the pneumatic chamber **115** is pressurized, the actuating collet **108** is lifted to allow the fingers **106** to move radially outwardly to free the tube **105**. Alternatively, only the chamber **114** can be connected to a pneumatic line, and a suitable spring can placed in the other chamber **115** to return the actuating collet **108** to its upper position.

While the preferred forms of the dispensing flow shutoff assemblies **92** and **104** have been shown and described, it should be understood that other alternative designs can be employed. For example, in place of the pneumatic chambers **114** and **115** of the flow shutoff assembly **104**, a pneumatically actuated diaphragm can be located near the top of the piston member to move the collet up and down. The bottom end or nose of the dispenser may also be modified so that it is narrower, allowing the dispensing head to fit into tighter spaces and dispense the foam into areas in which the other dispensing head would not fit.

### REFERENCE NUMBERS

- 10: system
- 11: control console
- 12: first supply tank
- 13: second supply tank
- 14:
- 15:
- 16: first control line
- 17: second control line
- 18:
- 19:
- 20: first high pressure pump
- 21: second high pressure pump
- 22: first supply hose
- 23: second supply hose
- 24: metering pump
- 25:
- 26:
- 27: third control line
- 28: third supply hose
- 29: fourth supply hose
- 30: mixing and dispensing head
- 31:
- 32:
- 33: temperature conditioning unit
- 34:
- 35:
- 36: gas injection system
- 37:
- 38:
- 39: substrate
- 40: solvent supply
- 41: air supply
- 42: main body
- 43: bearing housing
- 44: platform
- 45: motor
- 46: motor screw
- 47: motor shaft
- 48: drive shaft
- 49: coupling
- 50:
- 51: bearings
- 52: mixing shaft
- 53: mixing chamber
- 54: sealing device
- 55:
- 56:
- 57:
- 58: supply valve assembly
- 59: purge valve assembly
- 60: solvent purge port
- 61: air purge port
- 62: check valve
- 63:
- 64: supply valve body
- 65: connecting body
- 66: supply valve assembly screw
- 67: port
- 68: supply chamber
- 69: needle valve member
- 70: guide member
- 71: first pneumatic chamber
- 72: piston
- 73: spring
- 74: cap
- 75: supply valve cap bolt
- 76: knob
- 77: adjusting rod
- 78: nut member
- 79:
- 80:
- 81:
- 82:
- 83: enlarged mixing chamber
- 84: extension
- 85: mixing core
- 86: vane
- 87:
- 88:
- 89: dispensing channel
- 90: first O-ring
- 91: second O-ring
- 92: first flow shutoff assembly
- 93: fitting
- 94: housing
- 95: bolt
- 96: dispensing nozzle member
- 97: outer O-ring
- 98: first tube
- 99: second pneumatic chamber
- 100: first port
- 101: second port
- 102: annular chamber
- 103: housing ring
- 104: second flow shutoff assembly
- 105: second tube
- 106: finger
- 107: piston member
- 108: collet
- 109: collet piston
- 110: camming surface
- 111:
- 112: piston flange
- 113: ring
- 114: third pneumatic chamber
- 115: fourth pneumatic chamber

## Claims

1. A mixing and dispensing head (30) for a two component foam system which comprises:
a body (42) having a mixing chamber (53) formed therein along a longitudinal axis;
at least two supply portions (58) connected to the body, each of the supply portions for supplying one of the components to the mixing chamber at a component entry location, each of the component entry locations being longitudinally offset from each other; and
a rotating mixing member (85) within the mixing chamber for mixing the components together to form the foam product.

2. A mixing and dispensing head as in claim 1, wherein the mixing member includes a cylindrical core (85) having indentations therein and having angled vanes (86) extending therefrom.

3. A mixing and dispensing head as in claim 1, wherein the body (42) has a dispensing channel (89) downstream of the mixing chamber (53) comprising in addition a shutoff portion (92, 104) for stopping the flow of product from the dispensing channel.

4. A mixing and dispensing head as in claim 3, wherein the shutoff portion (92) is capable of withdrawing the product upstream.

5. A mixing and dispensing head as claimed in claim 1 further including
a dispensing channel (89) providing a supply of fluid material to be dispensed;
a housing (94) connected to the dispensing channel, the housing having an inner chamber (102);
a flexible tube (98) positioned within the housing and communicating with the dispensing channel to receive a flow of the material, the tube extending through the chamber; and
a port (100,102) for providing a supply of pressurized fluid to the chamber at variable pressure, a low pressure of fluid allowing the flow of material through the tube, a high pressure of fluid producing substantial pinching of the tube, and an intermediate pressure producing less pinching of the tube and causing withdrawal of the material in the tube in an upstream direction below the pinching.

6. A dispensing head as in claim 5, comprising in addition a second port (102) for providing a supply of pressurized fluid to the chamber at variable pressure.

7. A dispensing head as in claim 5, wherein the tube (98) is adapted to flatten in a plane perpendicular to an axis common to the ports when the chamber is pressurized.

8. A dispensing head as in claim 5, wherein the tube (98) assumes a normal generally cylindrical shape and the tube is resilient to flex inwardly to be pinched to shutoff the flow of fluid material and to return partially to its normal shape upon reduction in the pressure of the pressurized fluid.

9. A dispensing head as in claim 5, wherein the tube (98) has a generally cylindrical shape, the tube flexes inwardly to be pinched to shut off the flow of fluid material, and the tube resilient returns toward its generally cylindrical shape when the pressure of the pressurized fluid is reduced to cause the withdrawal of material.
